# EUROPÄISCHE PATENTSCHRIFT

(11) **EP 0 602 544 B1**
(45) Veröffentlichungstag und Bekanntmachung des Hinweises auf die Patenterteilung: **02.05.2003**
(21) Anmeldenummer: 93119850.1
(22) Anmeldetag: 09.12.1993
(51) Int. Cl.: H02J 13/00, G08C 19/28

(54) **Fernsteuereinrichtung**
Remote control device
Dispositif de commande à distance

(30) Priorität: 15.12.1992 DE 4242231
(43) Veröffentlichungstag der Anmeldung: 22.06.1994
(73) Patentinhaber: Diehl Stiftung & Co., 90478 Nürnberg (DE)
(72) Erfinder: Werner, Wolfgang, Dipl.-Ing., D-90461 Nürnberg (DE); Bauernfeind, Dieter, Dipl.-Ing., D-90425 Nürnberg (DE)

(56) Entgegenhaltungen:
- EP-A- 0 268 902
- EP-A- 0 446 864
- EP-A- 0 477 409
- EP-A- 0 494 030
- DE-A- 3 928 142
- DE-A- 4 202 552
- GB-A- 2 011 140
- US-A- 5 148 159

## Beschreibung

Die Erfindung betrifft eine Fernsteuereinrichtung gemäß dem Oberbegriff des Anspruches 1.

Derartige Einrichtungen sind handelsüblich für die drahtgebundene oder drahtlose Fernwirktechnik zwischen wenigstens einem Sender und wenigstens einem zugeordneten Empfänger, in dem bestimmte Funktionen ausgelöst werden sollen, die empfängerseitig vorgegeben sind. Dabei kann es sich um Rundsteueranlagen der Energietechnik (etwa zur Netzumschaltung) oder der Haustechnik (etwa zur Heizungsund Beleuchtungssteuerung mit stationär eingebauten Geräten) handeln, aber auch um Handfernsteuerungen für die Bedienung von Empfangs- und Aufzeichnungsgeräten der Telekommunikations- und Audiotechnik oder etwa um Fernbedienungen zur Steuerung eines Garagentores oder einer Kraftfahrzeug-Standheizung, -Türentriegelung, -Schiebedachverstellung und dergleichen. Dabei müssen für unterschiedliche Funktionen nicht unterschiedliche Fernsteuereinrichtungen eingesetzt werden; vielmehr kann eine Fernsteuereinrichtung sender- und empfängerseitig dafür ausgelegt sein, zwischen mehreren verfügbaren Funktionsinformationen auswählen zu können, um die gerade gewünschte Funktion auszulösen.

Fertigungsseitig problematisch ist die Zuordnung zwischen (wenigstens) einem Sender und (wenigstens) einem Empfänger über die senderseitige und empfängerseitige Eingabe eines Identifikations- oder Vergleichscodes um sicherzustellen, daß bestimmte Funktionen nur von bestimmten Autorisierten veranlaßt werden können, die nämlich über einen dem Empfänger zugeordneten Sender verfügen. Dafür muß in der Fertigung vor der Schlußabnahme für den im Sender gegebenen Vergleichscode (gewöhnlich eine binärcodierte Zahl) am Empfänger ein binäres Schaltwerk entsprechend gesetzt werden, was arbeitsaufwendig und fehleranfällig ist. Bei miniaturisierten Empfängern ist häufig nicht einmal der Platz für einen hinreichend zugänglichen DIP-Schalter vorhanden, und auch aus Preisgründen verbietet sich häufig der Einsatz eines solchen DIP-Schalters, so daß dann Drahtbrücken zur Anpassung zwischen empfängerseitigen Vergleichscodes und senderseitigen Identifikationscode eingelötet werden müssen, was ebenso fehleranfällig und noch arbeitsaufwendiger als die Schaltereinstellung ist - zumal dann, wenn nach Verlust eines Senders der weiterzubenutzende, eingebaute Empfänger trotz schlechter Zugänglichkeit auf den geänderten Identifikationscode eines neuen Senders umzuprogrammieren ist.

Diese bei einfachen Fernwirksystemen in der Praxis häufig anzutreffende Problematik ist überwunden, wenn gemäß DE 3928142 A1 jeder Sender mit einer Auslösetaste zum Starten der Funktion eines Zufallsgenerators ausgestattet ist, dessen Zufallszahl im Sender als Identifikationskode abgespeichert und außerdem vom Sender in denjenigen Empfänger eingespeichert wird, der gerade mittels eines Schalters in seinen Aufnahmezustand versetzt wurde. Bei späterem Empfang dient dann die im Empfänger abgespeicherte Zufallszahl als Vergleichskode mit der Wirkung, daß empfängerseitig nur solche Fernsteuerungsinformationen ausgeführt werden, die senderseitig mit dem damit übereinstimmenden Identifikationskode verknüpft sind. Die vom Sender abgestrahlte Fernsteuerinformation übt empfängerseitig jedoch kein Wirkung aus, solange der Empfänger für eine aktuelle Sender-Empfänger-Zuordnung gerade auf Aufnahme eines neuen Sender-Identifikationskodes als dem künftigen Empfänger-Vergleichskode aufnahmebereit geschaltet ist.

Eine ähnliche Übertragung eines Sender-Identifikationskodes an einen Empfänger zur dortigen Abspeicherung als Vergleichskode wird in der EP 0268902 A1 beschrieben; dort mit den Besonderheiten, daß die eigentliche Fernsteuerinformation nicht vom Sender übertragen wird, sondern im Empfänger abgespeichert ist und bei Aufnahme des zutreffenden Sender-Identifikationskodes lediglich ausgelöst wird. Für solche Kode-Zuordnung muß dort allerdings eigens eine Empfänger-Kennung bekannt sein, die von einem zusätzlichen, speziellen Programmiersender generiert werden muß, um darüber den Empfänger auf Aufnahme des künftig geltenden Vergleichskodes schalten zu können. Weil dafür also der Identkode des Empfängers am Sender manuell vorgegeben werden muß und somit jedem Bediener zur Verfügung steht, werden dadurch vielfältige Manipulationsmöglichkeiten eröffnet. Insbesondere kann nicht mehr ausgeschlossen werden, daß (irrtümlich oder sogar absichtlich) ein Empfänger mittels dieses Programmiersenders auf den Identkode eines ganz anderen Fernbedienungs-Senders umgestellt wird, so daß danach Unbefugte mit jenem anderen Sender diesen Empfänger aktivieren können, um beispielsweise eine Sicherheitsverriegelung zu öffnen oder einen Einbruchsmelder abzuschalten.

Diese Gefahr ist noch größer, wenn gemäß der ersterwähnten Vorveröffentlichung für das Umprogrammieren des Empfängers nicht einmal dessen individuelle Identinformation bekannt sein muß, sondern das einfache Umlegen eines Funktionsschalters genügt. In Erkenntnis dieser Problematik liegt der Erfindung die Aufgabe zugrunde, bei einer gattungsgemäßen Fernsteuereinrichtung eine sowohl für die Erstausstattung wie auch hinsichtlich spätere Änderungsmöglichkeiten wesentlich vereinfachte und vor allem gegen Mißbrauch und Manipulation sichere Zuordnungsmöglichkeit zwischen Sendern und Empfängern zu schaffen.

Diese Aufgabe ist erfindungsgemäß im wesentlichen dadurch gelöst, daß die gattungsgemäße Fernsteuereinrichtung nach dem Kennzeichnungsteil des Hauptanspruches ausgelegt ist.

Nach dieser Lösung kann im Empfänger vorübergehend die Aufnahme des von einem zugeordneten Sender gerade ausgestrahlten Identifikationscode in einen elektronischen Codespeicher freigegeben werden, wodurch dieser Empfänger jenem Sender funktional zugeordnet ist, künftig also die mit diesem Identifikationscode verknüpfte empfangene Funktionsinformation auf die Schnittstelle zur Auslösung vorgegebener Vorgänge durchschaltet. Wenn der empfängerseitige Codespeicher mehrere Speicherbereiche für unterschiedliche Identifikationscodes aufweist, können mehrere unterschiedlich codierte Sender diesem Empfänger zugeordnet werden, indem sie einfach nacheinander ihre Identifikationscodes abstrahlen, während der Empfänger auf Einspeichern dieser Codes geschaltet ist. Dabei können abgespeicherte alte Codes generell, oder aber nacheinander jeweils nur der am längsten abgespeicherte Code, gelöscht werden, um zu vermeiden, daß eine unüberschaubar große Anzahl von Sendern einen bestimmten Empfänger aktivieren kann.

Um Mißbrauch hinsichtlich der Umcodierung zu unterbinden, kann die Einspeichermöglichkeit für neue Sender-Codes über einen Sensor blockiert sein, der nur unter bestimmten Umständen die Aufnahme eines weiteren Codes freigibt, etwa in Abhängigkeit von bestimmten und nicht jedem ohne weiteres ersichtliche Bedienoperationsfolgen am Empfänger. Wenn der Empfänger etwa in ein Kraftfahrzeug eingebaut ist, um über die Fernsteuerung beispielsweise die Standheizung einschalten oder das Schiebedach öffnen zu können, dann kann die Aufnahmemöglichkeit für neue Sender-Codes beispielsweise darauf beschränkt werden, daß gleichzeitig ein bestimmter Zustand der Fahrzeugbeleuchtung und eine bestimmte Einstellung des Autoradios gegeben ist; oder daß die Fahrzeugbatterie abgeklemmt ist (während der Empfang eines neuen Identifikationscodes batteriegepuffert möglich bleibt); oder daß die Fahrzeugbatterie über eine definierte Zeitspanne abgeklemmt war und noch nicht zu lange wieder angeschlossen ist.

Jedenfalls braucht nun fertigungs- und vertriebsseitig keine bestimmte Zuordnung zwischen Fernsteuer-Sendern und -Empfängern mehr hergestellt und aufrechterhalten zu werden. Vielmehr werden die Sender unabhängig von den Empfängern gefertigt und im Zuge der Funktionsprüfung mit einem Identifikationscode (der aus eine Zufallsschaltung abgerufen sein kann) versehen; während unabhängig davon die Empfänger codeneutral ausgeliefert und erst für den Einsatz auf die Codes der konkret verfügbaren Sender programmiert werden.

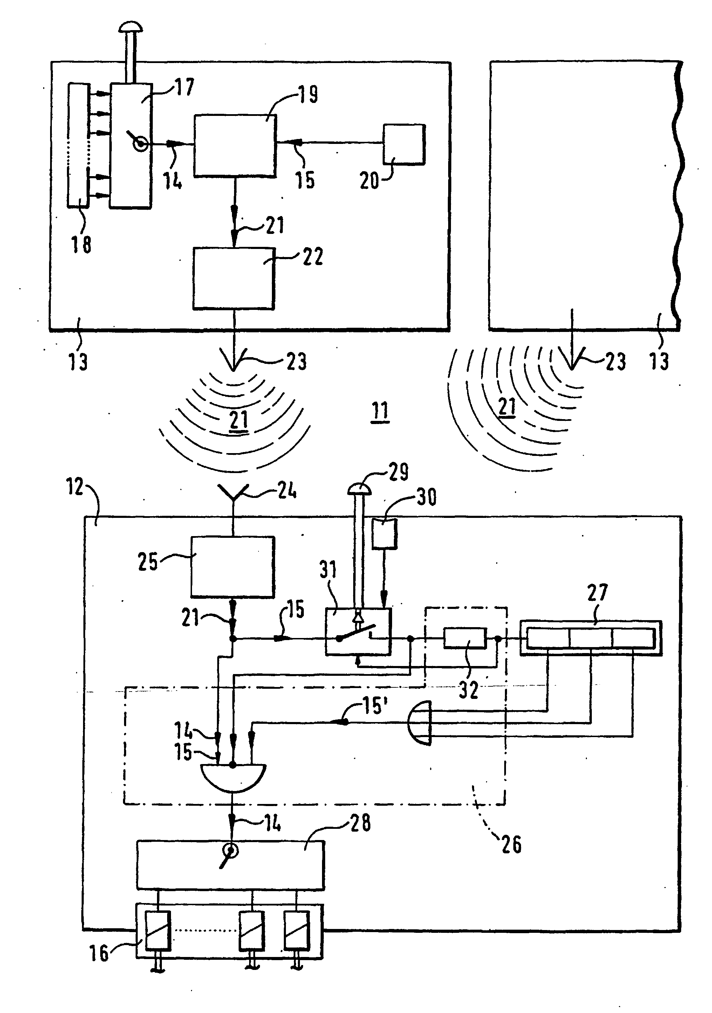

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche nach Art eines Blockschaltbildes stark abstrahiert skizzierten bevorzugten Realisierungsbeispiels zur erfindungsgemäßen Lösung. Die einzige Figur der Zeichnung zeigt zwei einem Fernsteuer-Empfänger zugeordnete Fernsteuer-Sender.

Die zeichnerisch skizzierte Fernsteuereinrichtung 11 arbeitet drahtlos, nämlich durch Übermittlung elektromagnetischer Energie jenseits des sichtbaren Strahlungsspektrums (im Ultraschall-, Infrarot- oder Funkbereich). Wenigstens einem Empfänger 12 ist mindestens ein Sender 13 zugeordnet. Die Zuordnung besteht darin, daß der Sender 13 außer einer Funktionsinformation 14 einen Identifikationscode 15 abstrahlt. Nur derjenige der Empfänger 12, der auf einen entsprechenden Vergleichscode 15' programmiert ist, gibt die Weiterverarbeitung der empfangenen Funktionsinformation 14 frei. Je nach der Vorgabe am Sender 13 besteht die Freigabe dann darin, daß die empfangene Information 14 eine bestimmte von mehreren verfügbaren Schnittstellen 16 aktiviert, die in der Zeichnung unten links durch mehrkanalige elektromechanische Wandler symbolisiert sind. Bei diesen handelt es sich beispielsweise um Relais zum Einschalten von Heizungs-, Beleuchtungs-, Aufnahme- und anderen Geräten der Haustechnik, oder um eine Garagentorsteuerung bzw. die ferngesteuerte Aktivierung einer Kraftfahrzeug-Standheizung und des Schließmechanismus für ein Faltverdeck oder für ein Schiebedach. Für die entsprechende Fernsteuerung wird am Sender 13 über einen manuell betätigbaren Auswahlschalter 17 die entsprechende verschlüsselte Funktionsinformation 14 aus einem Funktionsspeicher 18 abgerufen und in einem Kombinationsschaltkreis 19 (gewöhnlich einem Prozessor) mit dem Sender-Identifikationscode 15 aus einem Codespeicher 20 zur Fernsteuerinformation 21 verknüpft, die mittels einer Sendestufe 22 über einen Wandler 23 (etwa eine Strahlungsdiode oder eine Höchstfrequenzantenne) abgestrahlt wird.

Hinter einem entsprechenden Aufnehmer 24 und einer Empfangsstufe 25 des im Wirkbereich arbeitenden Empfängers 12 wird aus der empfangenen Fernsteuerinformation 21 der Identifikationscode 15 in einer Vergleichsschaltung 26 mit Code-Vorgaben 15' aus einem Codespeicher 27 verglichen und nur im Übereinstimmungsfalle die Funktionsinformation 14 auf einen Zuordnungsschalter 28 für die Ansteuerung der zugeordneten Schnittstelle 16 ausgegeben.

Wenn über mehrere unterschiedliche Sender 13 auf einen oder mehrere bestimmte Empfänger 12 gleichzeitig Fernsteuerungs-Zugriff möglich sein soll, dann können alle diese Sender 13 für Ausgabe derselben Identifikationscode 15 ausgestattet sein. Für die Belange der Praxis einfacher ist es jedoch, jeden Sender 13 mit einem anders eingestellten Codegeber 20 (also zur Abgabe einer anderen binärcodierten Zahl als dem Identifikationscode 15) auszustatten und dementsprechend einen Mehrfach-Codespeicher 27 im Empfänger 12 vorzusehen, der unterschiedliche Vergleichscodes 15' in die Vergleichsschaltung 26 einspeist, wie in der Zeichnung unten rechts vorgesehen.

Um nun einen beliebigen Sender 13 einem bestimmten Empfänger 12 zuzuordnen, muß der diesem Sender 13 individuelle Informationscode 15 in den Codespeicher 27 des zugeordneten Empfängers 12 eingegeben werden. Dafür wird im Empfänger 12 vorübergehend eine Lernschaltung aktiviert, die im Schaltbild als über eine Handhabe 29 oder einen Sensor 30 vorübergehend aktivierbarer Eingabeschalter 31 veranschaulicht ist. Wenn und solange dieser geschlossen ist, wird das Durchschalten einer Funktionsinformation 14 auf die Schnittstellen 16 blockiert und aus der gerade empfangenen Fernsteuerinformation 21 derjenige Datensatz-Teil, der einen empfangenen Identifikationscode 15 darstellt, über eine Prüfschaltung 32 in den Codespeicher 27 eingegeben. Die Prüfschaltung 32 stellt sicher, daß nur derjenige Teil einer empfangenen Fernsteuerinformation 21 abgespeichert wird, der störungsfrei empfangen und eindeutig ein Identifikationscode 15 (aber keine Funktionsinformation 14) ist; und daß aufeinanderfolgende übereinstimmende Informationscodes 15 nur einmal eingespeichert werden. Der Codespeicher 27 kann dafür, wie schaltungstechnisch veranschaulicht, als Schieberegister ausgestaltet sein, das (parallel oder seriell) so viele Identifikationscodes 15 nacheinander aufnehmen kann, wie unterschiedlich codierte Sender 13 auf diesen Empfänger 12 Zugriff haben können sollen. Bei gefülltem Schieberegister entfällt also der jeweils älteste und künftig nicht mehr benötigte Vergleichscode 15', wenn ein neuer Identifikationscode 15 eingespeichert wird. So stehen im Empfänger 12 nur maximal so viele unterschiedliche Vergleichscodes 15' zur Verfügung, wie maximal unterschiedlich codierte Sender 13 auf diesen Empfänger 12 Zugriff haben sollen.

Die vorübergehende Aktivierung des monostabil rückschaltenden Eingabeschalters 31 über einen Sensor 30 hat gegenüber der aus DE-A-39 28 142 bekannten manuellen Betätigung über ein Handhabe 29 den Vorteil, mißbräuchliche Umcodierung des Empfängers 12 dadurch weitgehend ausschließen zu können, daß die Anregung des Sensors 30 nicht ohne weiteres erkennbar oder möglich ist. So kann der Sensor 30 und damit der Eingabeschalter 31 auf bestimmte nicht ohne weiteres auffindbare Umweltzustände ansprechen. Dabei kann etwa daran gedacht werden, den Empfänger 12 mit einem lageabhängigen Sensor 30 auszustatten, der dann und erst dann initiiert wird, wenn das Gehäuse des Empfängers 12 nacheinander in unterschiedlichen Richtungen (liegend, stehend, schräg) orientiert wurde. Oder der Sensor 30 spricht dann und nur dann an, wenn die Versorgungsspannung (etwa eine eingelegte Batterie) über eine Zeitspanne abgeschaltet war, die zwischen einer schaltungstechnisch vorgegebenen Mindest- und einer Höchstzeitspanne lag. Der Eingabeschalter 31 kann, wie im Schaltbild berücksichtigt, auch von der Prüfschaltung 32 immer wieder abgeschaltet werden, wenn ein gültiger Identifikationscode 15 aufgenommen wurde. Auch dadurch wird mißbräuchliche oder irrtümliche Falschcodierung vermieden, denn für jeden weiteren einzuspeichernden Identifikationscode 15 muß danach der Schalter 31 erneut über die den Sensor 30 initiierende Operation geschlossen werden.

Diese Verriegelungen können ebenso wie die Vergleichsund Durchschaltoperationen in der Vergleichsschaltung 26, gegebenenfalls unter Einschluß der Wirkungsweisen des Eingabeschalters 31 und des Zuordnungsschalters 28, in einem zentralen Prozessor realisiert werden, um gegenüber diskreten Schaltungen einen flexibleren und preiswerteren Aufbau zu erzielen.

## Patentansprüche

1. Fernsteuereinrichtung (11) mit einander über Identifikationskodes (15) zugeordneten Sendern (13) und Empfängern (12) für Fernwirk-Funktionsinformationen (14), wobei der Empfänger (12) eine Lernschaltung (31) und einen Kodespeicher (27) aufweist und die Lernschaltung (31) vorübergehend zur Aufnahme eines zu empfangenden Identifikationskodes (15) und zur Eingabe des empfangenen Identifikationskodes als künftiger Vergleichskode (15') in dem Kodespeicher (27) aktivierbar ist,
**dadurch gekennzeichnet,**
**daß** die Lernschaltung (12) über einen Sensor (30) vorübergehend zur Aufnahme eines neuen Identifikationskodes (15) freischaltbar ist, wobei der Sensor (30) auf eine vorgegebene Folge manueller Operationen anspricht.

2. Fernsteuerung nach Anspruch 1, **dadurch gekennzeichnet, daß** der Sensor (30) auf Ausfall einer Versorgungsspannung anspricht.

3. Fernsteuereinrichtung nach Anspruch 1, **dadurch gekennzeichnet, daß** der Sensor (30) auf Einstellungen an Geräten anspricht, die funktional nicht mit dem Empfänger (12) verbunden sind.

4. Fernsteuereinrichtung nach einem der vorangehenden Ansprüche, **dadurch gekennzeichnet, daß** der Kodespeicher (27) zur Aufnahme mehrerer Identifikationskodes (15, 15, ...) ausgelegt ist.

5. Fernsteuereinrichtung, nach Anspruch 4, **dadurch gekennzeichnet, daß** der Kodespeicher (27) zum Löschen eines alten Identifikationskodes (15) bei Aufnahme eines neuen Identifikationskodes (15) ausgelegt ist.

6. Fernsteuereinrichtung nach Anspruch 4 oder 5, **dadurch gekennzeichnet, daß** der Kodespeicher (27) als Schieberegister ausgelegt ist.

7. Fernsteuereinrichtung nach einem der vorangehenden Ansprüche, **dadurch gekennzeichnet, daß** dem Kodespeicher (27) eine Prüfschaltung (32) für die Identifikationskodes (15) vorgeschaltet ist.

## Claims

1. Remote control device (11) with transmitters (13) and receivers (12), which are associated with one another by way of identification codes (15), for remote-control functional information (14), the receiver (12) including a learning circuit (31) and a code memory (27) and the learning circuit (31) being temporarily activatable for reception of an identification code (15) to be received and for inputting the received identification code as future comparison code (15') into the code memory (27),
**characterized in that**
the learning circuit (31) can temporarily be cleared by way of a sensor (30) for the reception of a new identification code (15), the sensor (30) responding to a predetermined sequence of manual operations.

2. Remote control according to Claim 1, **characterized in that** the sensor (30) responds to interruption of a supply voltage.

3. Remote control according to Claim 1, **characterized in that** the sensor (30) responds to settings in respect of equipment not functionally connected to the receiver (12).

4. Remote control device according to one of the preceding claims, **characterized in that** the code memory (27) is designed to receive a plurality of identification codes (15, 15, ...).

5. Remote control according to Claim 4, **characterized in that** the code memory (27) is designed to delete a former identification code (15) upon receiving a new identification code (15).

6. Remote control according to Claim 4 or 5, **characterized in that** the code memory (27) is designed as a shift register.

7. Remote control according to one of the preceding claims, **characterized in that** a checking circuit (32) for the identification code (15) is connected upstream of the code memory (27).

## Revendications

1. Dispositif de télécommande (11) avec des émetteurs (13) et des récepteurs (12) assignés les uns aux autres par des codes d'identification (15) pour des informations (14) de fonction de télécommande, le récepteur (12) présentant un circuit d'apprentissage (31) et une mémoire de codes (27), et le circuit d'apprentissage (31) pouvant être provisoirement activé pour la réception d'un code d'identification à recevoir (15) et pour l'entrée du code d'identification reçu comme futur code de référence (15') dans la mémoire de codes (27), **caractérisé en ce que** le circuit d'apprentissage (31) peut être provisoirement déconnecté par un capteur (30) pour la réception d'un nouveau code d'identification (15), le capteur (30) répondant à un ordre pré-défini d'opérations manuelles.

2. Télécommande selon la revendication 1, **caractérisée en ce que** le capteur (30) répond à la défaillance de la tension d'alimentation.

3. Dispositif de télécommande selon la revendication 1, **caractérisé en ce que** le capteur (30) répond aux réglages sur des appareils qui ne sont pas reliés fonctionellement au récepteur (12).

4. Dispositif de télécommande selon l'une quelconque des revendications précédentes, **caractérisé en ce que** la mémoire de codes (27) est conçue pour l'admission de plusieurs codes d'identification (15, 15, ...).

5. Dispositif de télécommande selon la revendication 4, **caractérisé en ce que** la mémoire de codes (27) est conçue pour effacer un ancien code d'identification (15) lors de l'admission d'un nouveau code d'identification (15).

6. Dispositif de télécommande selon la revendication 4 ou 5, **caractérisé en ce que** la mémoire de codes (27) est conçue comme un registre à décalages.

7. Dispositif de télécommande selon l'une quelconque des revendications précédentes, **caractérisé en ce qu'**un circuit de test (32) pour les codes d'identification (15) est disposé en amont de la mémoire de codes (27).
